Europäisches Patentamt

European Patent Office

Office européen des brevets

(19)

(11) Veröffentlichungsnummer : **0 115 503**
**B1**

(12) **EUROPÄISCHE PATENTSCHRIFT**

(45) Veröffentlichungstag der Patentschrift :
16.04.86

(51) Int. Cl.⁴ : **G 03 B 21/54**

(21) Anmeldenummer : **83902428.8**

(22) Anmeldetag : **22.07.83**

(86) Internationale Anmeldenummer :
**PCT/DE 83/00129**

(87) Internationale Veröffentlichungsnummer :
**WO/8400824 (01.03.84 Gazette 84/06)**

(54) BEHÄLTER, VORZUGSWEISE ZUR AUFNAHME VON GERAHMTEN DIAPOSITIVEN.

(30) Priorität : **11.08.82 DEU 8222612**

(43) Veröffentlichungstag der Anmeldung :
**15.08.84 Patentblatt 84/33**

(45) Bekanntmachung des Hinweises auf die Patenterteilung : **16.04.86 Patentblatt 86/16**

(84) Benannte Vertragsstaaten :
**DE FR GB SE**

(56) Entgegenhaltungen :
**EP-A- 0 027 095**
**FR-A- 1 379 877**
**FR-A- 1 430 995**
**US-A- 3 104 044**
**US-A- 3 344 974**

(73) Patentinhaber : **LÖRSCH, Johannes**
**An der Bleiche 49**
**D-4172 Straelen 1 (DE)**

(72) Erfinder : **LÖRSCH, Johannes**
**An der Bleiche 49**
**D-4172 Straelen 1 (DE)**

(74) Vertreter : **Bonsmann, Manfred, Dipl.-Ing. et al**
**Kaldenkirchener Strasse 35a**
**D-4050 Mönchengladbach 1 (DE)**

## Beschreibung

Die Erfindung betrifft einen Behälter, vorzugsweise zur Aufnahme von gerahmten Diapositiven, mit einem Gehäuse mit nach unten leicht zulaufend ausgebildeten Wandteilen und im Behälterinneren angeordneten, quer zur Behälterlängsachse verlaufenden Stegen von geringerer Höhe als das Behälterinnere.

Derartige Behälter werden beispielsweise zur Aufnahme von in Rahmungsmaschinen gerahmten Diapositiven eingesetzt. Es ist bekannt, die Behälterwände nach unten leicht zulaufend auszubilden, was ein Ineinanderstapeln der Behälter ermöglicht. Weiterhin ist es auch bekannt, im Behälterinneren quer zur Behälterlängsachse verlaufende Stege anzuordnen, mit denen das Behälterinnere in einzelne Aufnahmeabteile unterteilt wird, welche gleichzeitig insbesondere bei länglich ausgebildeten Behältern die Stabilität der Seitenwände erhöhen.

Der Erfindung liegt die Aufgabe zugrunde, einen Behälter der eingangs genannten Art so zu gestalten, daß eine Trennung mehrerer ineinander gestapelter Behälter ohne weiteres möglich ist, und zwar insbesondere im Hinblick auf eine automatische, nacheinander folgende Zuführung der Behälter von einem Stapel zu einer Rahmungsmaschine für Diapositive.

Zur Lösung dieser Aufgabe ist erfindungsgemäß vorgesehen, daß der Behälter wenigstens an zwei gegenüberliegenden Wänden außenseitig eine — von dem Behälterboden nach oben gesehen — vorspringend ausgebildete Schulter aufweist, deren Abstand von dem Behälterboden größer ist als der Abstand von der Behälteroberkante bis zur Oberkante der Stege.

Vorzugsweise ist vorgesehen, daß die Schulter um den Behälter umlaufend ausgebildet ist.

In weiterer Ausgestaltung der Erfindung kann vorgesehen sein, daß die Wände des Behälters oberhalb und unterhalb der Schulter gleiche Wandstärken aufweisen.

Bei der Erfindung ist vorteilhaft, daß von mehreren ineinandergestapelten Behältern gleicher Art jeweils der unterste Behälter in den Stapel so lose eingerastet ist, daß er durch Wirkung der Schwerkraft nach unten fallen kann bzw. so leicht von dem Stapel lösbar ist, daß ein automatisches Entstapeln des Behälters möglich ist. Bei ineinandergestapelten Behältern bildet sich bei der erfindungsgemäßen Gestaltung zwischen der vorstehend ausgebildeten Schulter und dem jeweils oberen Rand der Wände des darunter in dem Stapel angeordneten Behälters eine Nut aus, in die eine Sperrklinke od. dgl. so einfassen kann, daß jeweils der gesamte Stapel — abgesehen von dem untersten Behälter — durch die Sperrklinke abgestützt wird, so daß der jeweils unterste Behälter — wenn er losgelassen wird — frei nach unten beispielsweise in eine entsprechende Aufnahmevorrichtung einer Rahmungsmaschine fallen kann.

Die Schulter erhöht darüber hinaus die Stabilität derartiger Behälter, welche üblicherweise aus dünnwandigem Kunststoff hergestellt werden. Bei der erfindungsgemäßen Ausbildung sind darüber hinaus die Wandstärken weitgehend gleichmäßig ausgebildet, was ein ungleichmäßiges Schrumpfen während des Erkaltens bei Kunststoffbehältern vermeidet.

Die Erfindung wird nachfolgend anhand der in den Zeichnungen dargestellten Ausführungsbeispiele näher erläutert. Es zeigen :

Figur 1 eine Seitenansicht eines Behälters gemäß der Erfindung ;

Figur 2 eine Draufsicht auf den Behälter gemäß Fig. 1 ;

Figur 3 einen Schnitt längs der Linie III-III in Fig. 2, wobei jedoch nicht nur der in Fig. 2 dargestellte Behälter, sondern ein in einem Behälterstapel darunter angeordneter, gleich ausgebildeter Behälter dargestellt ist.

Der zur Aufnahme von gerahmten Diapositiven vorgesehene Behälter 1 weist ein Gehäuse mit einem Boden 2, Seitenwänden 3, 4 sowie Stirnwänden 5, 6 auf, die etwa in den beiden unteren Dritteln der Wände leicht nach unten zulaufend ausgebildete Wandteile 3a, 4a, 5a, 6a aufweisen. Im Inneren sind quer zu den Längswänden angeordnete Stege 7, 8, 9 angebracht, durch die der Behälter in jeweils vier Abteile 10, 11, 12 und 13 aufgeteilt wird, in welche jeweils zehn gerahmte Diapositive (nicht dargestellt) eingefüllt werden können. Außenseitig weist der Behälter eine umlaufende, vorspringende Schulter auf, welche an den Seitenwänden mit 14, 15 und an den Stirnwänden mit 16 und 17 bezeichnet ist. Die Wandungen 3a, 4a, 5a und 6a, also die unterhalb der Schulter befindlichen Wandungen, weisen mit den oberhalb der Schulter befindlichen Wandungen 3b, 4b bzw. 5b, 6b gleiche Wandstärken auf. Der Abstand A der Schulter vom Behälterboden 2 ist größer als der Abstand B von der Behälteroberkante bis zur Oberkante der Stege 7, 8, 9. Die Stege selbst sind in der Mitte höher als an den Seiten ausgebildet, um in die so gebildeten Seitenräume 18, 19 einen (nicht gerahmten) Filmabschnitt (nicht dargestellt) einlegen zu können, ohne daß dieser Filmabschnitt durch den noch auf das Gehäuse aufzubringenden Deckel (der nicht näher beschrieben ist, da nicht zur Erfindung gehörend) beschädigt wird.

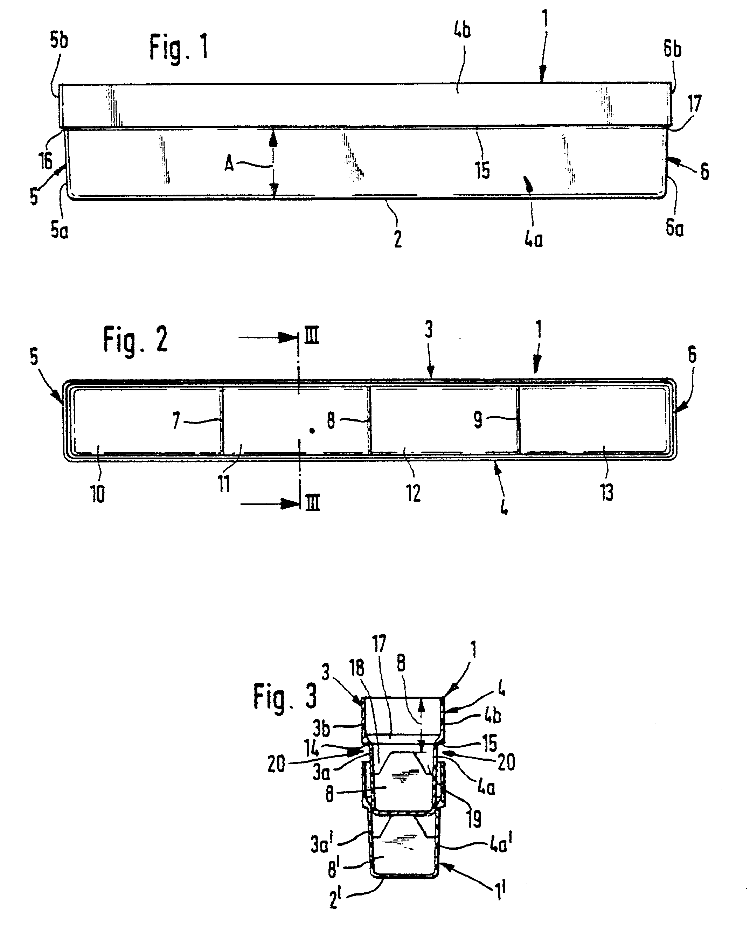

Wie aus Fig. 3 ersichtlich, liegt bei mehreren ineinandergestapelten Behältern (Behälter 1 und ein entsprechend ausgebildeter Behälter 1') der obere Behälter 1 auf den Stegen (hier ist der Steg 8' dargestellt) des unteren Behälters 1' auf und kann daher nicht an den zulaufend ausgebildeten Innenseiten der Wandteile 3a' bzw. 4a' des unteren Behälters 1' festhaften.

Wenn in eine Rahmungsmaschine zum Rahmen von Diapositiven beispielsweise ein aus fünfzig derartigen Behältern bestehender Stapel eingesetzt wird, erfolgt das nacheinanderfolgende Trennen der Behälter in der Weise, daß der gesamte Stapel von dem Boden des untersten Behälters (hier 1') her angehoben wird, bis eine Sperrklinkenanordnung der Vorrichtung in die Nut 20 zwischen der Oberkante des untersten Behälters 1' und der Schulter 14, 15, 16, 17 des darüber befindlichen Behälters 1 eingerastet ist. Wenn dann der Boden 2' des untersten Behälters 1' losgelassen wird, so fällt dieser ohne weiteres Zutun infolge seiner Schwerkraft nach unten in eine geeignete Aufnahmevorrichtung der Rahmungsmaschine.

## Patentansprüche

1. Behälter, vorzugsweise zur Aufnahme von gerahmten Diapositiven, mit einem Gehäuse mit nach unten leicht zulaufend ausgebildeten Wandteilen und im Behälterinneren quer zur Behälterlängsachse verlaufend angeordneten Stegen von geringerer Höhe als das Behälterinnere, dadurch gekennzeichnet, daß der Behälter (1) wenigstens an zwei gegenüberliegenden Wänden (3, 4) außenseitig eine — von dem Behälterboden (2) nach oben gesehen — vorspringend ausgebildete Schulter (14, 15) aufweist, deren Abstand (A) von dem Behälterboden (2) größer ist als der Abstand (B) von der Behälteroberkante bis zur Oberkante der Stege (7, 8, 9).

2. Behälter nach Anspruch 1, dadurch gekennzeichnet, daß die Schulter um den Behälter (1) umlaufend ausgebildet ist.

3. Behälter nach Anspruch 1 oder 2, dadurch gekennzeichnet, daß die Wände (3, 4, 5, 6) des Behälters (1) oberhalb und unterhalb der Schulter gleiche Wandstärken aufweisen.

## Claims

1. A box, preferably for receiving framed slides, comprising a housing having wall portions which are arranged to converge slightly in a downward direction and in the interior of the box web portions which are arranged to extend transversely with respect to the longitudinal axis of the box and which are lower in height than the interior of the box, characterised in that at least at two oppositely disposed walls (3, 4) on the outside thereof the box (1) is provided with a shoulder (14, 15) which is of a projecting configuration as viewed upwardly from the bottom (2) of the box and the spacing (A) of which from the bottom (2) of the box is greater than the spacing (B) from the upper edge of the box to the upper edge of the web portions (7, 8, 9).

2. A box according to claim 1 characterised in that the shoulder extends around the box (1).

3. A box according to claim 1 or claim 2 characterised in that the walls (3, 4, 5, 6) of the box (1) are of the same wall thicknesses above and below the shoulder.

## Revendications

1. Réceptacle, pour recevoir de préférence des diapositives encadrées, avec un boîtier comportant des parties de parois qui obliquent légèrement vers l'intérieur et vers le bas, et, à l'intérieur du réceptacle, des cloisons perpendiculaires à l'axe longitudinal de celui-ci et moins hautes que l'intérieur du réceptacle, caractérisé en ce que le réceptacle (1) présente extérieurement au moins sur deux parois opposées (3, 4) un épaulement (14, 15) saillant — vu du fond du réceptacle (2) vers le haut — dont la distance (A) par rapport au fond (2) de réceptacle est plus grande que la distance (B) entre le dessus du réceptacle et le dessus des cloisons (7, 8, 9).

2. Réceptacle suivant la revendication 1, caractérisé en ce que l'épaulement autour du réceptacle (1) est périphérique.

3. Réceptacle suivant la revendication 1 ou 2 caractérisé en ce que les parois (3, 4, 5, 6) du réceptacle (1) ont des épaisseurs égales au-dessus et au-dessous de l'épaulement.

Fig. 1

Fig. 2

Fig. 3